# EUROPEAN PATENT APPLICATION

(11) **EP 1 241 315 A2**
(43) Date of publication of application: **18.09.2002**
(21) Application number: 01500203.3
(22) Date of filing: 31.07.2001
(51) Int. Cl.: E06B 3/54, E04B 2/88, E04D 3/06, E04F 13/14

(54) **System for attaching laminated glass panels**

(30) Priority: 15.03.2001 ES 200100600 U
(71) Applicant: Construcciones Metalliques Bellapart, S.A., 17800 Olot Girona (ES)
(72) Inventor: Arbos Bellapart, Francesc, 17800 Olot (ES)
(74) Representative: Ponti Sales, Adelaida

(57) **Abstract**

It comprises a plurality of elements (1) for attaching each panel to a fixed structure, said laminated glass panels being formed by at least two sheets of glass (2,3) and by at the least one intermediate union sheet (4) inserted between each two sheets of glass and is characterised in that the attaching elements (1) are fixed to the minimum of one intermediate union sheet (4).

In this manner, the post-breakage response of the laminated glass panel is improved considerably.

## Description

This invention relates to a system for attaching laminated glass panels onto facades, roofs, interior surfaces and the like.

### BACKGROUND OF THE INVENTION

Nowadays it is known that buildings are styled every time more where the presence of sheets of laminated glass has gained preference over metallic finishes. In order to secure the aforesaid panels, it is necessary to use systems for attaching said panels to the structure of the building.

Known in the art are systems for attaching panels of laminated glass to structures, such as the attaching device described in utility model n° 99000989, which comprises two arms articulated onto each other, with a first arm provided for attachment onto the fixed structure and a second arm provided for attachment onto the laminated glass panel; more specifically, this last arm has a cavity into which a conical plug is inserted so that its base rests on the sheet of glass.

This attaching device nevertheless has the disadvantage that, due to the attaching element being attached directly on the sheets of glass, in the event of breakage of said sheets of glass the panel could fall down, with the consequent risk of it falling on persons who might be underneath it. This is due to the fact that the attaching device rests on the most fragile zone of the glass panel.

### DESCRIPTION OF THE INVENTION

The object of the system of the invention is to solve the disadvantages presented by the devices and systems known in the art, while providing many other advantages that will be described below.

The attaching system of this invention is of the type which includes a plurality of elements for attaching each panel to a fixed structure, said panels of laminated glass being made up of at least two sheets of glass and at the least one union sheet placed between each two sheets of glass.

According to one characteristic of this invention, said attaching system is characterised in that the attaching elements are attached to the minimum of one intermediate union sheet.

Thanks to this characteristic of the system, the post-breakage response of the laminated glass panel is improved, since a considerable improvement in the rigidity of the panel is achieved, preventing the possibility of it coming away in the event of breakage of both of the sheets of glass.

According to one aspect of the invention, each attaching element includes a supporting arm which includes means of articulation adaptable to the inclination of the glass panel in relation to the fixed structure.

Preferably, the means of articulation include at least one ball-and-socket joint.

According to one embodiment of the invention, at a zone of attachment contact with the intermediate sheet, the attaching element has a toothed surface. This ensures a more consistent attachment between the contact zone of the attaching element on the intermediate union sheet.

The procedure for attaching the attaching element on laminated glass panels is characterised in that it consists in:
a) Cutting a zone of the two sheets of glass to leave the intermediate union sheet exposed;
b) fitting the attaching element onto the intermediate union sheet.

### BRIEF DESCRIPTION OF THE DRAWINGS

In order to facilitate the description of all that has been set out above, some drawings are attached in order to show, schematically and solely by way of non-restrictive example, a practical case of embodiment of the attaching system of the invention, in which:
Figure 1 is a perspective view of the attaching element of the attaching system of this invention;
Figure 2 is a cross-section elevation view showing how the attaching element is attached to a panel of laminated glass.

### DESCRIPTION OF A PREFERRED EMBODIMENT

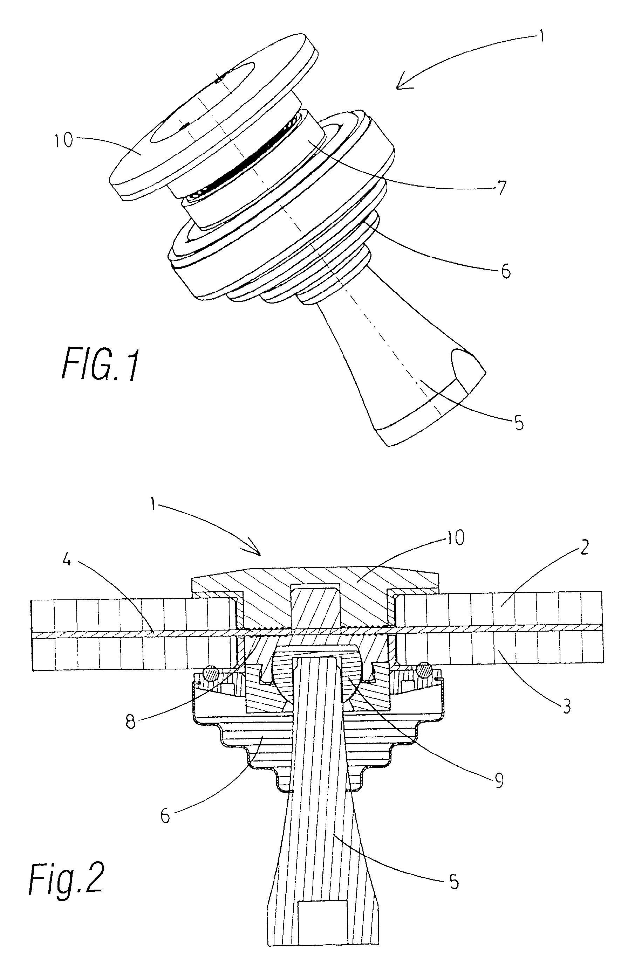

Making particular reference to Figure 1, this shows the attaching element 1 of the attaching system for laminated glass panels. Said glass panels are formed of two sheets of glass 2, 3 between which is an intermediate union sheet 4 made of an iconoplastic material that does not have a visco-elastic response.

Said attaching element 1 is made up of an arm 5 which includes on one end a rubber body 6 for the rain, on which is a discoid body 7 which has a toothed surface 8 on the face that is in contact with the intermediate sheet 4. This toothed profile 8 provides a better grip on the aforesaid union sheet 4.

Figure 2 shows more clearly how the attaching element 1 is fitted onto the intermediate union sheet of the laminated glass panel. Said figure also shows in detail the arrangement of the various components that comprise the attaching element, such as the position of the ball-and-socket joint 9 that permits optimum fit of the device of the invention.

As the figures show, the attachment is implemented from both sides of the panel by means of the body 7 and a plug 10 which, like the aforesaid body 7, has a toothed profile in the zone that makes contact with the intermediate sheet 4.

The procedure for attaching of a attaching element (1) on laminated glass panels consists in first place in cutting a zone of the two sheets of glass (2,3) to leave the intermediate union sheet (4) exposed and subsequently fitting the attaching element (1) onto the intermediate union sheet (4).

Independent of the object of this invention are the materials used for manufacturing the pieces that make up the attaching system described, and the shapes and dimensions of same and all accessory details that might be presented, which can be replaced by others that are technically equivalent, as long as they do not affect its essential nature or depart from the sphere defined by the claims attached below.

## Claims

1. System for attached laminated glass panels, which comprises a plurality of elements (1) for attaching each panel to a fixed structure, said laminated glass panels being formed by at least two sheets of glass (2,3) and by at the least one intermediate union sheet (4) inserted between each two sheets of glass, **characterised in that** the attaching elements (1) are fixed to the minimum of one intermediate union sheet (4).

2. Attaching system, as claimed in Claim 1, **characterised in that** each attaching element (1) includes a supporting arm (5) which includes means of articulation adaptable to the inclination of the glass panel in relation to the fixed structure.

3. Attaching system, as claimed in Claim 2, **characterised in that** the means of articulation include at least one ball-and-socket joint (9).

4. Attaching system, as claimed in any of claims 1 to 3, **characterised in that**, at a zone of attachment contact with the intermediate sheet (4), the attaching element (1) has a toothed surface (8).

5. Procedure for attaching of a attaching element (1) on laminated glass panels being formed by at least two sheets of glass (2,3) and by at the least one intermediate union sheet (4) inserted between each two sheets of glass, which is **characterised in that** it consists in:
a) Cutting a zone of the two sheets of glass (2,3) to leave the intermediate union sheet (4) exposed;
b) fitting the attaching element (1) onto the intermediate union sheet (4).
